Europäisches Patentamt

European Patent Office

Office européen des brevets

(11) Numéro de publication: **0 195 718**
**A1**

## (12) DEMANDE DE BREVET EUROPEEN

(21) Numéro de dépôt: 86400570.7

(22) Date de dépôt: 18.03.86

(51) Int. Cl.⁴: **G09B 23/30** , **B29C 33/40**

(30) Priorité: 22.03.85 FR 8504284

(43) Date de publication de la demande:
24.09.86 Bulletin 86/39

(84) Etats contractants désignés:
BE DE FR GB NL SE

(71) Demandeur: COMMISSARIAT A L'ENERGIE
ATOMIQUE Etablissement de Caractère
Scientifique Technique et Industriel
31/33, rue de la Fédération
F-75015 Paris(FR)
Demandeur: ETAT FRANCAIS
29 Boulevard Victor
F-75015 Paris(FR)

(72) Inventeur: Gain, Robert
4, rue Jean Moulin
F-77500 Chelles(FR)
Inventeur: Simon, Jacques
9, rue de la Gare
F-94200 Ivry(FR)
Inventeur: Pasturel, André
66, rue de Romainville
F-75019 Paris(FR)
Inventeur: Roger, Marc
31 rue Georges Mederic
F-94700 Maisons Alfort(FR)

(74) Mandataire: Mongrédien, André et al
c/o BREVATOME 25, rue de Ponthieu
F-75008 Paris(FR)

(54) Crâne artificiel, t te prothétique réalisée à partir de ce crâne et leur procédé de réalisation.

(57) La présente invention a pour objet un crâne artificiel et
une tête prothétique réalisée à partir de ce crâne, ainsi que
leur procédé de fabrication.

On réalise d'abord un crâne (94) en une résine époxy
dont l'épaisseur est adaptée pour que la tenue à la compression en un point donné soit la même qu'au point correspondant d'un crâne réel. On place ensuite les parties molles :
encéphale (96), globes oculaires (108), pavillons auriculaires
(112), et pyramide nasale (108). Ces organes sont réalisés
en un silicone additionné d'huile en quantité variable pour
que leur dureté soit la même que celle des organes réels
correspondants. Le crâne est ensuite placé sur un support -
(100) qui permet de l'orienter correctement dans le moule où
l'on coule la peau (124).

Application à l'étude des lésions provoquées par des
chocs.

FIG.13

## CRANE ARTIFICIEL, TETE PROTHETIQUE REALISEE A PARTIR DE CE CRANE ET LEUR PROCEDE DE REALISATION.

La présente invention a pour objet un crâne artificiel et une tête prothétique réalisée à partir de ce crâne, ainsi qu'un procédé de réalisation de ce crâne et de cette tête.

Dans le domaine de la prévention des accidents, on cherche de plus en plus, à l'heure actuelle, à étudier le comportement mécanique du corps humain et notamment des os en cas de choc. Ceci a pour but non seulement de déterminer toutes les conséquences dues à un choc en un point donné, mais aussi d'étudier l'efficacité de certaines protections. La tête étant une partie du corps particulièrement sensible, elle fait l'objet d'une attention spéciale.

La présente invention trouve une application particulièrement intéressante dans l'étude de l'efficacité des casques pour motocyclistes et également pour automobilistes dans le cas des voitures de sport ou autres engins de compétition (karting, etc.).

Dans l'industrie automobile, on utilise des mannequins avec des têtes synthétiques pour simuler les accidents. Cependant, ces têtes sont en bois ou en métal et n'ont donc pas les mêmes caractéristiques mécaniques qu'une véritable tête ou un véritable crâne humain. D'autre part, il est difficile de faire des expériences sur de véritables crânes humains car, après la mort du sujet, les os durcissent et n'ont plus les mêmes caractéristiques mécaniques qu'un os vivant.

Il existe à l'heure actuelle des crânes artificiels utilisés notamment à des fins pédagogiques. Cependant, ces crânes sont réalisés en des matières plastiques souples et le plus souvent sont constitués de deux parties qui sont assemblées suivant un plan à l'aide de tenons et mortaises. Le plan de joint est choisi de manière à rendre facile la réalisation des deux parties du crâne (cavités largement ouvertes vers l'extérieur et absence de contre-dépouilles). On comprend que, si de tels crânes sont commodes pour l'étude de l'anatomie, ils ne permettent pas de faire des essais mécaniques sur la résistance aux chocs, d'une part parce que les matériaux choisis ont des caractéristiques très différentes de celles des os véritables, et d'autre part parce que le plan d'assemblage des deux parties ne correspond à rien sur le plan anatomique.

Il existe également des têtes prothétiques pour l'étude des blessures provoquées par les accidents d'automobile. Cependant, ces têtes sont constituées d'une simple enveloppe externe reproduisant sensiblement l'aspect extérieur d'une véritable tête humaine à l'intérieur de laquelle sont placées des structures métalliques en forme de nid d'abeilles. Ces dispositifs permettent de déterminer à quels endroits les contraintes subies sont les plus fortes ou d'établir des cartes de probabilités de choc, mais n'ont pas le même comportement biomécanique qu'une véritable tête humaine.

La présente invention a pour but d'éliminer ces inconvénients en proposant un crâne artificiel et une tête prothétique réalisée à partir de ce crâne ayant les mêmes caractéristiques de forme et de comportement mécanique qu'un crâne frais et qu'une tête réelle respectivement. Selon l'invention, ce crâne est réalisé en un matériau dont l'épaisseur est adaptée pour que la résistance à la compression en un point du crâne artificiel soit voisine de la résistance à la compression au point correspondant du crâne frais. Dans le mode de réalisation préféré, ce matériau est une résine époxy.

L'expression "crâne frais" utilisée dans le présent texte désigne soit le crâne d'un sujet vivant (humain ou animal), soit le crâne prélevé peu de temps après la mort d'un sujet afin que ses caractéristiques mécaniques ne soient pas modifiées.

Quant à l'expression "caractéristiques de forme", elle signifie que le crâne artificiel doit avoir la même forme et les mêmes dimensions qu'un véritable crâne humain et également que les cavités correspondant aux cavités naturelles d'un véritable crâne humain ou animal doivent avoir la même forme et les mêmes dimensions que ces dernières, à cette nuance près que l'épaisseur du matériau constitutif doit être adaptée pour la raison citée plus haut.

Dans le mode de réalisation préféré, la forme extérieure du crâne artificiel est identique à celle du crâne frais. Comme l'épaisseur du matériau constitutif du crâne artificiel est différente de celle de l'os véritable, les cavités internes ne reproduisent pas exactement les cavités du crâne frais. Cependant, ceci n'est pas gênant car les différences sont faibles (de l'ordre de quelques millimètres).

Selon une autre caractéristique de l'invention, le crâne comportant une boîte crânienne et un maxillaire inférieur, la masse de matériau constituant les parois de la boîte crânienne est homogène et continue.

L'invention a également pour objet un procédé de réalisation d'un crâne artificiel par moulage d'un premier matériau dans un moule comportant plusieurs parties, ledit crâne comportant au moins une cavité, procédé caractérisé en ce qu'il comprend les étapes suivantes consistant à :

(a) -déterminer le module d'Young en compression en différents points d'un crâne frais,

(b) -calculer les épaisseurs équivalentes du premier matériau pour que la résistance à la compression soit la même en chaque point considéré,

(c) -réaliser un crâne modèle avec les épaisseurs équivalentes ainsi calculées, ce crâne modèle ayant une cavité correspondant à celle du crâne à réaliser,

(d) -prendre une empreinte externe du crâne modèle en deux étapes afin d'obtenir un moule en deux parties, (e) -prendre une empreinte de la cavité du crâne modèle afin d'obtenir un premier noyau, les étapes (d) et (e) étant effectuées simultanément,

(f) -éliminer le crâne modèle,

(g) -prendre une empreinte du premier noyau afin d'obtenir un contre-moule,

(h) -réaliser, dans le contre-moule,un deuxième noyau en un deuxième matériau pouvant être éliminé sélectivement par rapport au premier,

(i) -placer le deuxième noyau dans l'une des parties du moule en l'orientant grâce à un moyen de positionnement approprié,

(j) -fermer le moule par assemblage de ses différentes parties,

(k) -introduire le premier matériau à l'intérieur du moule,

(l) -laisser durcir le premier matériau,

(m) -séparer les différentes parties du moule, et

(n) -éliminer le deuxième noyau.

De préférence, le premier matériau est une résine époxy, tandis que le deuxième matériau est un matériau pouvant être éliminé par dissolution dans un solvant qui n'attaque pas et ne dissout pas le premier matériau.

Selon une autre caractéristique de ce procédé, l'étape (a) consiste à :

(1) -prélever une éprouvette osseuse de section sensiblement cylindrique et d'axe sensiblement perpendiculaire à la paroi osseuse en chaque point du crâne frais dont on veut déterminer le module d'Young en compression,

(2) -réaliser, à partir de ladite éprouvette osseuse, une éprouvette d'essai ayant la forme d'un cylindre régulier de même section que l'éprouvette osseuse en fixant sur cette dernière au moins un élément en un matériau dont le module d'Young en compression est connu,

(3) -soumettre l'éprouvette d'essai à un essai de compression, et

(4) -déterminer le module d'Young en compression de l'éprouvette osseuse d'après les résultats de cet essai.

Le procédé s'applique surtout dans le cas de la réalisation d'un crâne humain artificiel où ladite cavité est une cavité nasale ou cérébrale.

Dans le cas où le crâne à réaliser comporte au moins une cavité orbitaire, le procédé comprend en outre les étapes suivantes, effectuées avant l'étape (j) et consistant à

(o) -réaliser un noyau orbitaire en un troisième matériau,

(p) -monter sur le noyau orbitaire un élément rigide présentant un trou taraudé,

(q) -placer le noyau orbitaire à l'intérieur de l'une des partie du moule, l'élément rigide étant reçu dans un logement prévu à cet effet, et

(r) -fixer le noyau orbitaire à l'aide d'une vis pénétrant depuis l'extérieur de ladite partie du moule, à travers un trou prévu à cet effet, jusque dans ledit trou taraudé.

Toujours dans le cas où le crâne à réaliser comporte au moins une cavité orbitaire, lors de l'extraction du crâne artificiel terminé, c'est-à-dire après l'étape (l) ci-dessus, on retire la vis et on extrait le noyau orbitaire de la cavité orbitaire.

Dans le cas où le crâne artificiel à réaliser comporte un maxillaire inférieur et une boîte crânienne ayant au moins une cavité (c'est le cas des crânes humains dont la boîte crânienne présente une cavité nasale et une cavité cérébrale), on réalise séparément par moulage le maxillaire inférieur et la boîte crânienne.

De préférence, le matériau servant à réaliser le crâne modèle est une cire qui présente l'avantage d'être facile à mettre en oeuvre.

L'invention a également pour objet une tête prothétique. Selon la principale caractéristique de cette tête, celle-ci comprend un crâne tel que le crâne mentionné ci-dessus.

Selon une autre caractéristique de cette tête, celle-ci comprend en outre au moins une partie molle ayant les mêmes caractéristiques de forme et le même comportement mécanique que la partie molle correspondante d'une tête réelle.

Dans la présente description, on appelle "parties molles" les parties de la tête autres que les os, c'est-à-dire essentiellement l'encéphale, les globes oculaires, les oreilles, la pyramide nasale et la peau. Ces diverses parties molles ont les mêmes dimensions (pour la peau la même épaisseur) que les parties molles correspondantes de la tête réelle et sont réalisées en un matériau qui a le même comportement mécanique (essentiellement la même dureté) que la partie molle réelle. Dans le mode de réalisation préféré, ce matériau est un silicone mélangé avec de l'huile.

L'invention a également pour objet un procédé de réalisation de cette tête prothétique. Selon la principale caractéristique de ce procédé, celui-ci comprend les étapes suivantes consistant à :

(5) -réaliser un crâne artificiel par le procédé décrit ci-dessus,

(6) -placer ce crâne dans un moule en deux parties en l'orientant grâce à un moyen de positionnement,

(7) -couler un matériau simulant la peau dans le moule,

(8) -laisser durcir ce matériau,

(9) -séparer les deux parties du moule, et

(10) -extraire la tête ainsi terminée.

En général, ce procédé comporte une étape supplémentaire, effectuée avant l'étape (6), consistant à placer, à un endroit donné du crâne, une partie molle en un matériau ayant les mêmes caractéristiques de forme et de résistance mécanique que la partie molle correspondante d'une tête réelle.

De préférence, on utilise comme matériau constitutif de ladite partie molle un silicone mélangé avec de l'huile et on ajuste la quantité d'huile dans le mélange pour que la dureté de ladite partie molle soit identique à celle de la partie molle correspondante d'une tête réelle.

Si le crâne utilisé comporte un trou occipital, on utilise comme moyen de positionnement un support ayant à une de ses extrémités une bosse dont la forme correspond à celle du trou occipital et à l'autre extrémité des moyens d'orientation aptes à coopérer avec des moyens d'orientation correspondant prévus dans le moule.

La réalisation dudit support peut comporter les étapes suivantes consistant à :

(α) -réaliser un support modèle de forme sensiblement cylindrique, ce support modèle ayant à une de ses extrémités une forme telle que le crâne puisse reposer sur ce support modèle, lorsque ce dernier est en position verticale, avec la même orientation qu'un crâne réel par rapport à un cou, et à l'autre extrémité au moins un moyen d'orientation,

(ß) -prendre une empreinte du support modèle en deux parties afin de réaliser un contre-moule, et

(γ) -réaliser le support par moulage de son matériau constitutif dans le contre-moule.

Selon une autre caractéristique de ce procédé, la réalisation du moule comprend les étapes suivantes consistant à :

(δ) - réaliser un crâne ayant le même aspect extérieur que celui utilisé pour la réalisation de la tête prothétique,

(ε) -placer ce crâne sur un moyen de positionnement identique à celui utilisé à l'étape (6),

(ζ) -recouvrir extérieurement ce crâne et ce moyen de positionnement d'un matériau apte à être sculpté,

(η) -sculpter ce matériau pour lui donner la forme et les dimensions extérieures d'une tête réelle, constituant ainsi une tête modèle, et

(θ) -prendre une empreinte de cette tête modèle en deux étapes, réalisant ainsi le moule.

Enfin, le procédé peut comporter une étape supplémentaire, effectuée avant l'étape (7), consistant à placer un capteur de mesure à un endroit donné de la tête.

Ce capteur (il peut y en avoir plusieurs) permet de déterminer les contraintes ou les accélérations subies en un endroit donné de la tête sous l'effet d'une sollicitation extérieure (choc, bruit, etc.).

L'invention apparaîtra mieux à la lecture de la description qui va suivre, donnée à titre d'exemple purement illustratif et nullement limitatif, en référence aux dessins annexés, dans lesquels :

-les figures 1a à 1d sont des vues schématiques en coupe illustrant de manière plus détaillée comment on réalise les étapes (a) à (c) du procédé de réalisation du crâne artificiel,

-la figure 2 est une vue schématique de profil d'un crâne humain,

-la figure 3 est une vue schématique en coupe illustrant aussi bien la réalisation du moule servant à réaliser le maxillaire inférieur que la réalisation de ce dernier,

-la figure 4 est une vue schématique en perspective montrant le maxillaire inférieur avant qu'il ne soit extrait de son moule,

-la figure 5 est une vue schématique en coupe illustrant la réalisation du moule et des noyaux définissant les cavités à l'aide d'un crâne modèle,

-la figure 6 est une vue schématique en coupe illustrant la mise en place du moule et des noyaux servant à la réalisation d'un crâne artificiel,

-les figures 7a et 7b sont des vues schématiques en perspective illustrant le contre-moule servant à réaliser le noyau cérébral,

-la figure 8 est une vue schématique en coupe montrant comment on réalise le noyau cérébral par agitation du contre-moule illustré aux figures 6a et 6b,

-les figures 9a et 9b sont des vues schématiques en perspective illustrant le contre-moule servant à réaliser le noyau correspondant à la cavité nasale,

-la figure 10 est une vue schématique en perspective illustrant le crâne artificiel terminé, la partie inférieure de celui-ci se trouvant encore dans la partie inférieure du moule,

-les figures 11a et 11b sont des vues schématiques en perspective illustrant respectivement la partie inférieure et la partie supérieure du moule servant à déterminer la forme extérieure du crâne,

-les figures 12a à 12f sont des vues schématiques illustrant les différentes étapes de la réalisation d'un crâne artificiel selon l'invention,

-la figure 13 est une vue schématique en coupe illustrant la réalisation d'une tête prothétique à partir du crâne objet de l'invention,

-la figure 14 est une vue schématique en élévation montrant la tête prothétique terminée avant son démoulage, et

-la figure 15 est une vue schématique en élévation montrant comment on peut placer différents capteurs à l'intérieur de la tête prothétique.

Afin de réaliser des crânes synthétiques dont les caractéristiques mécaniques sont très proches de celles d'un crâne humain, on a d'abord effectué des essais mécaniques de compression uniaxiale sur des éprouvettes prélevées en divers points de crânes humains frais. Les modules d'Young mesurés varient de 90 à 760 hbars avec 50 % des éprouvettes donnant une valeur supérieure à 550 hbars, la moyenne étant de 700 hbars environ. La dispersion de ces résultats vient essentiellement de ce que la composition des os humains n'est pas homogène et varie d'un point du crâne à l'autre. En fonction de ces résultats, on a déterminé qu'une résine époxy convenait bien pour réaliser des crânes artificiels. En particulier, on peut utiliser une résine époxy de type DGE BPA chargée additionnée d'un durcisseur aminé. A partir de ces résultats, on a déterminé une épaisseur équivalente de résine pour que la résistance à la compression en un point du crâne artificiel soit égale à la résistance à la compression au point de correspondant du crâne frais. A partir de ces épaisseurs équivalentes, on a réalisé un crâne en cire ayant la forme et les dimensions d'un véritable crâne humain (sous réserve de l'adaptation des épaisseurs). Ce crâne en cire a servi à réaliser les moules utilisés pour la réalisation des crânes synthétiques dans le procédé objet de l'invention.

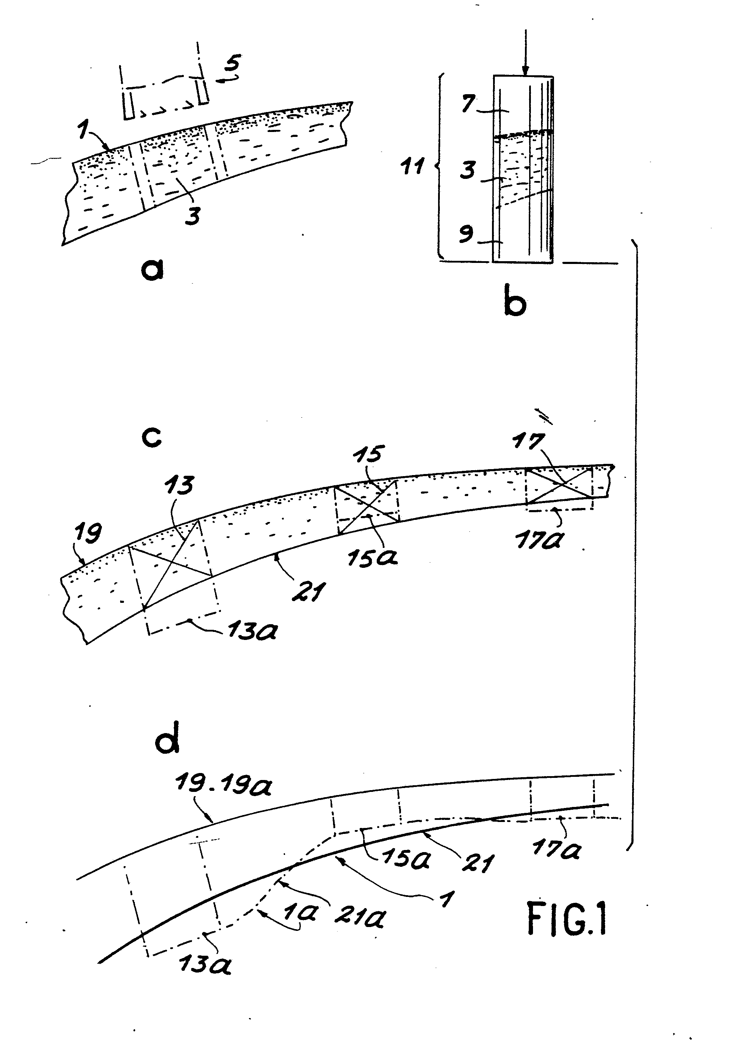

La détermination du module d'Young en compression en différents points d'un crâne frais va maintenant être décrite en référence aux figures 1a à 1d ainsi que la détermination de l'épaisseur équivalente de résine époxy et la réalisation du crâne modèle en cire.

Sur la vue en coupe de la figure 1a, on voit qu'on commence par prélever, dans la paroi osseuse 1, une éprouvette osseuse 3 à l'aide d'un trépan 5. L'éprouvette 3 est prélevée sensiblement perpendiculairement à la paroi osseuse 1 et sa section droite est circulaire, son diamètre étant par exemple de l'ordre de 8 mm. Cependant, il est impossible de réaliser directement des essais de compression sur l'éprouvette osseuse 3 car les faces d'extrémité des éprouvettes telles que 3 ne sont pratiquement jamais parallèles : en effet, les faces externe et interne de la paroi 1 sont rarement parallèles en un point donné. D'autre part, il y a des différences sensibles d'un point à un autre et il arrive que des éprouvettes prélevées symétriquement (à 1 ou 2 mm près) par rapport au plan de symétrie du crâne ne soient pas identiques. C'est pourquoi, afin d'effectuer des essais en compression uniaxiale qui soient représentatifs, on réalise des éprouvettes d'essai telles que celle illustrée à la figure 1b.

Pour cela, on complète l'éprouvette 3, à chacune de ses extrémités, par des éléments cylindriques 7, 9 qui s'adaptent parfaitement à la forme de l'éprouvette 3, constituant ainsi une éprouvette d'essai 11 ayant la forme d'un cylindre régulier dont le diamètre est celui de l'éprouvette 3. Dans les essais qui ont été effectués, les éprouvettes 11 avaient une hauteur de 20 mm pour un diamètre de 8 mm, mais on ne sortirait pas du cadre de l'invention en utilisant d'autres valeurs. Les éléments 7 et 9 peuvent par exemple être réalisés en Araldite CW 216.

On a ainsi réalisé une éprouvette dont la hauteur totale sera désignée par h, $h_o$ étant la hauteur moyenne de la partie osseuse et $h_a$ la hauteur de la partie restante définie par $h_a = h - h_o$. Il est à remarquer que, du fait que les faces d'extrémité des éprouvettes 3 ne sont pas parallèles, leur hauteur n'est pas constante : on prend donc pour $h_o$ la moyenne entre les hauteurs minimale et maximale. Il se peut aussi que la section droite de l'éprouvette osseuse ne soit pas constante : dans ce cas, pour calculer la contrainte subie lorsque l'éprouvette est en compression, on ne prend en compte que la valeur de la section minimale.

L'éprouvette 3 est ensuite mise en compression, comme cela est symbolisé par les flèches F sur la figure 1b. On détermine ainsi le module d'Young E de l'ensemble de l'éprouvette 11 et on détermine le module d'Young $E_o$ de la partie osseuse par la relation :

$$\frac{h_o}{E_o} = \frac{h}{E} - \frac{h_a}{E_a}$$

$E_a$ étant le module d'Young des éléments 7 et 9 (par exemple 760 hbars dans le cas de l'araldite). Cette valeur peut être soit déjà connue, soit déterminée par un essai préalable. On a ainsi pu déterminer que les os de la boîte crânienne avaient des modules d'Young présentant des variations importantes d'un point à un autre, les valeurs minimales étant de l'ordre de 100 hbar et les valeurs maximales de l'ordre de 800 hbar environ.

L'étape suivante est la détermination des épaisseurs équivalentes du matériau constituant le crâne artificiel pour qu'en un point donné, la résistance à une sollicitation mécanique soit la même que celle de l'os réel. Pour réaliser le crâne artificiel, on peut utiliser des résines du type mentionné ci-dessus qui ont un module d'Young en compression de l'odre de 600 hbar. De toute façon, il est préférable d'utiliser un matériau dont le module d'Young se situe dans l'intervalle des modules d'Young de l'os réel.

L'épaisseur équivalente $h_r$ de résine est déterminée par la formule :

$$\frac{h_r}{h_o} = \frac{E_o}{E_r}$$

$E_r$ étant le module d'Young de la résine.

Sur la vue en coupe de la figure 1c, on a représenté en traits pleins trois éprouvettes 13, 15, 17 et, en traits mixtes, on a représenté l'épaisseur équivalente de résine nécessaire pour avoir la même résistance à la compression. Dans cet exemple, les éléments en résine 13a et 17a sont plus épais que les éprouvettes 13 et 17 et l'élément 15a plus mince que l'éprouvette 15.

Sur la figure 1d, on a représenté en traits pleins la paroi osseuse 1 du crâne réel et en traits interrompus la paroi correspondante 1a du crâne artificiel. La paroi 1 a une face externe 19 et une face interne 21. On rappelle que, de préférence, le crâne artificiel a la même forme extérieure que le crâne réel. En conséquence, la face externe 19a de la paroi 1a est confondue avec la face 19. Sa face interne 21a est différente de la face 21 et elle passe par les extrémités des éléments 13a, 15a et 17a situées à l'intérieur du crâne.

Il se peut que les essais de compression effectués sur un crâne frais donnent des résultats très différents même entre des points assez voisins. Dans ce cas, on prend la moyenne des valeurs obtenues pour déterminer l'épaisseur équivalente de résine. Ceci n'est pas gênant pour les essais effectués ultérieurement avec le crâne ou la tête prothétique réalisée à partir de ce crâne. En effet, il s'agit surtout d'essais de choc pour lesquels on n'a pas besoin d'une grande précision et le comportement mécanique du crâne artificiel reste proche de celui d'un crâne réel.

Le crâne en cire servant à réaliser les moules et contre-moules utilisés dans l'invention a une forme, en une zone donnée, identique à celle de la paroi 1a de la figure 1d.

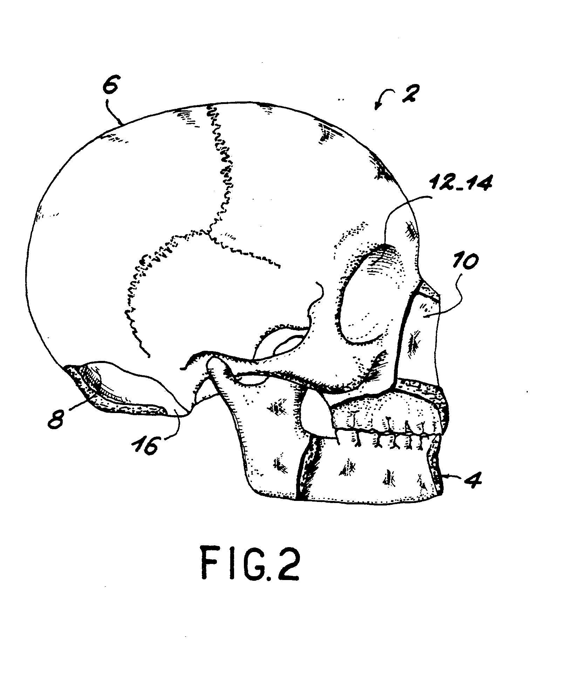

On va maintenant décrire la réalisation du crâne artificiel objet de l'invention en référence aux figures 2 à 12.

La figure 2 représente schématiquement un crâne humain, portant la référence générale 2, et qui se compose de deux parties mobiles l'une par rapport à l'autre, à savoir un maxillaire inférieur 4 et une boîte crânienne 6. Pour plus de commodité, on réalise séparément le maxillaire inférieur 4 et la boîte crânienne 6 car, le maxillaire présentant peu d'angles rentrants, peu de contre-dépouilles et aucune cavité, il est facile à réaliser par moulage par des méthodes classiques. La réalisation de la boîte crânienne est plus difficile car celle-ci comporte un certain nombre de cavités, c'est-à-dire essentiellement la cavité cérébrale 8, la cavité nasale 10 et les cavités orbitaires 12 et 14. Ces cavités communiquant avec l'extérieur par des trous de petit diamètre par rapport à leurs dimensions (trou cervical 16 pour la cavité cérébrale 8), une méthode particulière a dû être mise au point.

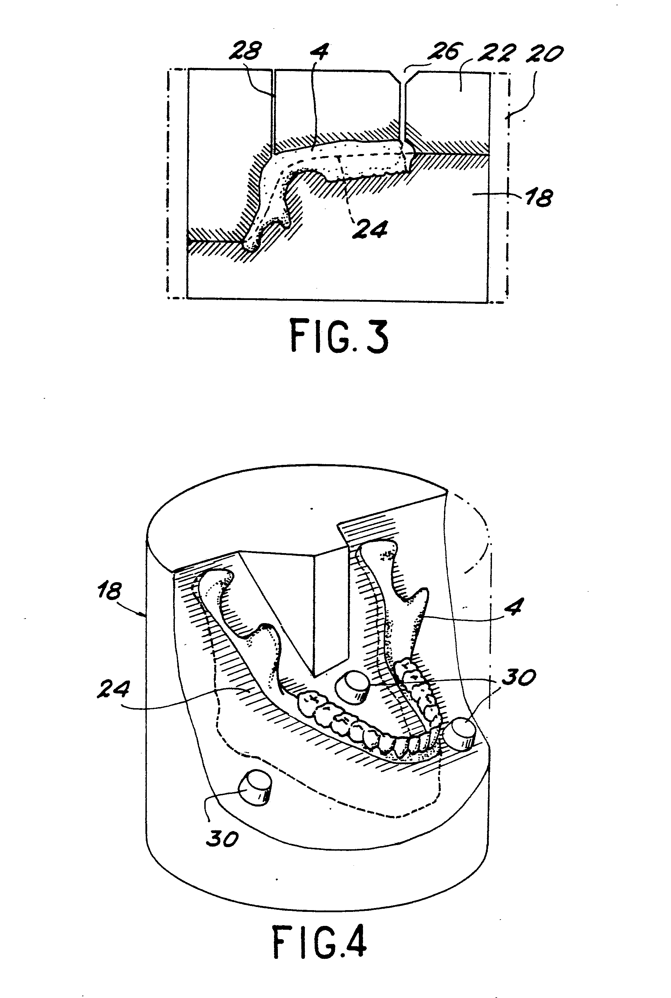

Avant de décrire en détail la réalisation de la boîte crânienne avec ses différentes cavités, on va décrire la réalisation du maxillaire inférieur en référence aux figures 3 et 4. Cette opération comporte essentiellement deux étapes : d'abord réalisation du moule à partir du maxillaire en cire, puis réalisation du maxillaire en résine à l'aide de ce moule.

La figure 3 montre qu'on place d'abord le maxillaire inférieur 4 dans une masse de plâtre 18 contenue à l'intérieur d'un récipient 20. On façonne la masse de plâtre avant durcissement pour que le plan de joint suive une ligne correspondant approximativement à la moitié de la hauteur du maxillaire. Puis on coule au-dessus du maxillaire 4 et de la masse 18 une masse 22 d'un matériau qui constituera la première partie du moule en prenant pour plan de joint la ligne indiquée ci-dessus. On extrait ensuite le maxillaire en cire 4 et la masse 22 de la masse de plâtre 18 et on recommence l'opération en utilisant la masse 22 comme support inférieur. On peut également procéder en sens inverse, la masse 22 constituant la partie supérieure du moule dans laquelle on a prévu un trou de coulée de la résine 26 et un évent 28. Dans ce cas, qui est celui illustré à la figure 3, la masse 18 n'est plus la masse de plâtre, mais l'autre partie du moule. Pour réaliser ce dernier, il est préférable d'utiliser un matériau souple, par exemple un silicone et notamment un silicone de type RTV, ce qui facilite le démoulage. On peut utiliser par exemple le produit commercialisé sous le nom de RTV 1502 par la Société RHONE-POULENC.

La figure 4 montre le maxillaire inférieur 4 tel qu'il se présente dans la partie inférieure 18 du moule après durcissement de la résine et après qu'on a enlevé la partie supérieure 22 du moule. On voit sur cette figure trois pions de centrage 30 qui permettent de positionner les deux parties du moule l'une par rapport à l'autre. Etant donné la souplesse du matériau utilisé, l'opérateur peut facilement écarter les bords de la masse de silicone du maxillaire 4 par une simple pression des doigts, ce qui facilite l'extraction de ce dernier.

On va maintenant décrire la réalisation des moules et contre-moules utilisés pour la réalisation de la boîte crânienne en résine, ces moules et contre-moules étant réalisés à partir d'empreintes prises sur le crâne en cire.

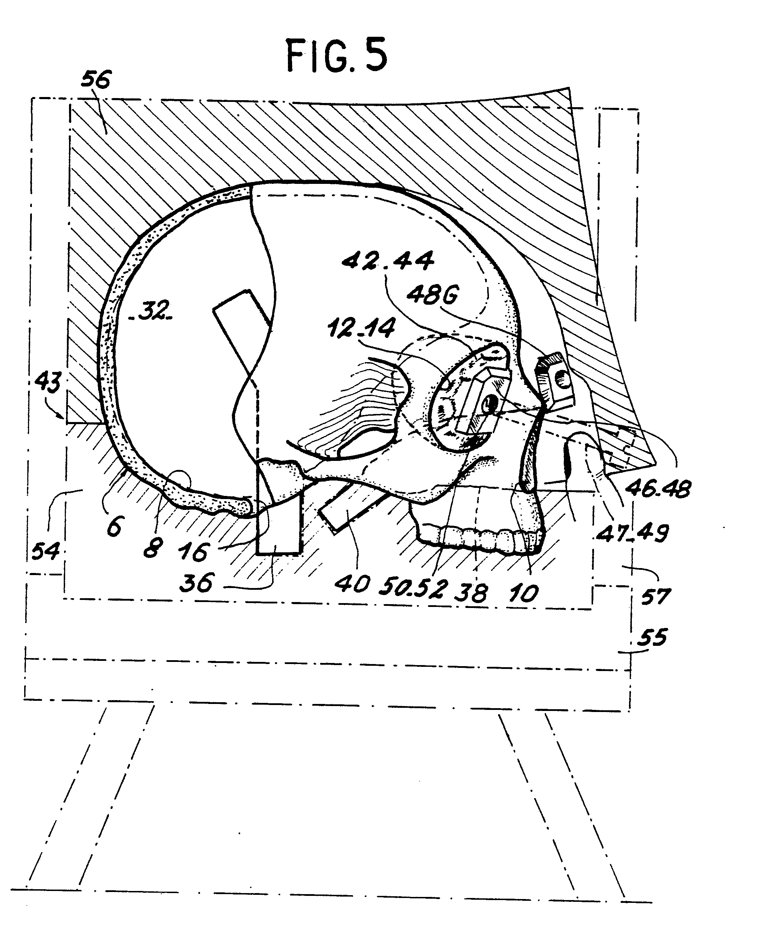

Comme on le voit sur la figure 5, on commence par remplir la cavité cérébrale 8 de la boîte crânienne en cire 6 avec une masse 32 d'un produit qui peut être celui qui a servi à réaliser le maxillaire inférieur. Cette masse est introduite sous forme liquide par le trou cervical 16 et, toujours à travers ce dernier, on introduit un moyen de positionnement 36 qui, dans l'exemple décrit ici, est une tige rigide de section carrée. De la même façon, on introduit dans la cavité nasale 10 une masse 38 du même produit avec une tige de positionnement 40 qui est elle aussi une tige rigide de section carrée. Enfin, on coule dans les cavités orbitaires 12 et 14 des noyaux 42 et 44 qui sont avantageusement eux aussi en silicone. On voit encore sur la figure 5 que l'on place dans les noyaux 42 et 44 des plaques 46 et 48 munies chacune d'un trou taraudé 50 et 52 respectivement. Le rôle de ces plaques perforées sera expliqué ultérieurement dans la suite du présent texte, lorsqu'on décrira la réalisation d'un crâne en résine.

Une fois placés les noyaux 32, 38, 42 et 44, on réalise le moule de la partie extérieure de la boîte crânienne. Ce moule 43 se compose d'une partie inférieure 54 et d'une partie supérieure 56 et il est réalisé de manière connue en prenant pour plan de joint une ligne passant par l'apophyse zygomatique. Les éléments 54 et 56 sont réalisés par coulée d'un silicone dans un récipient constitué d'une embase 55 surmontée d'un manchon cylindrique 57. La souplesse de ce matériau rend le démoulage extrêmement facile comme on le voit sur la partie droite de la figure 5 : l'opérateur peut déformer, par une simple pression des doigts, une partie du moule supérieur 56 pour l'écarter du crâne.

On voit encore sur la figure 5 que, lors de la réalisation de la partie inférieure 54 du moule, les extrémités des tiges 36 et 40 se trouvent à l'extérieur des cavités cérébrale et nasale et sont donc prises dans la masse de silicone constituant la partie inférieure 54 du moule. Après extraction de ce dernier, ces tiges laissent des traces 37 et 41 respectivement (voir figure 11a) qui serviront à positionner les noyaux lors de la réalisation du crâne en résine. Lorsque les éléments 54 et 56 ont durci, on les extrait en les déformant si nécessaire, puis on détruit le crâne en cire pour récupérer le noyau 32 équipé de sa tige de positionnement 36, ainsi que le noyau 38 équipé de sa tige de positionnement 40. On extrait également les noyaux orbitaires 42 et 44 équipés des plaques 46 et 48. On prend ensuite une empreinte des noyaux 32 et 38 afin de réaliser les contres-moules qui serviront ultérieurement à réaliser les noyaux solubles délimitant les cavités cérébrale et nasale du crâne à réaliser. Ces empreintes sont effectuées en deux parties, de manière classique.

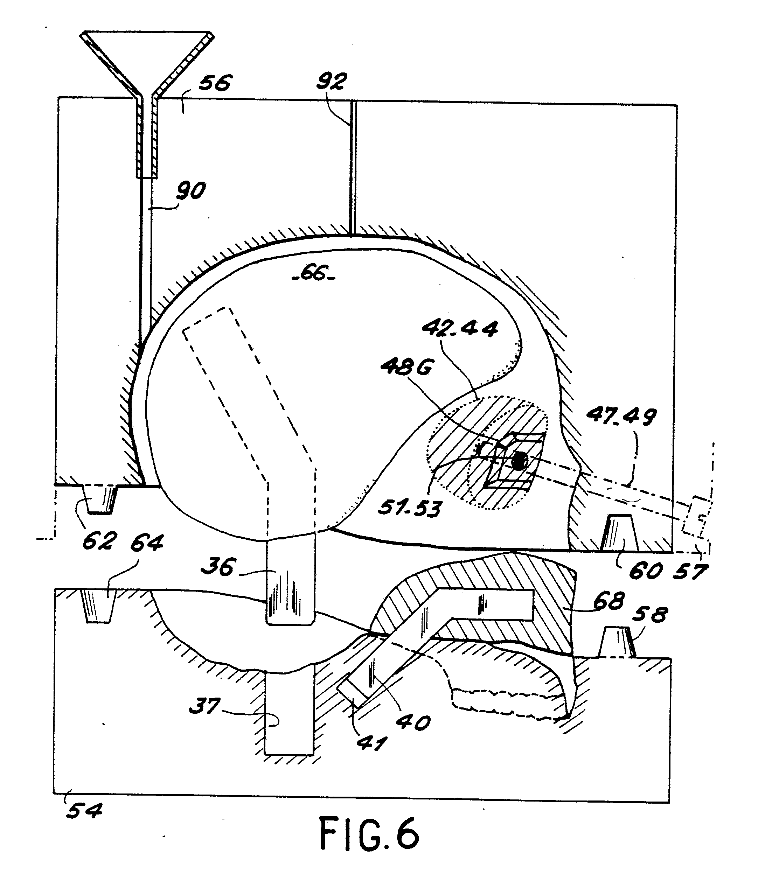

On va maintenant décrire la réalisation d'un crâne artificiel en résine en se référant aux figures 6 à 12.

Sur la figure 6, on voit d'abord la partie inférieure 54 du moule qui comporte un ou plusieurs pions de centrage 58 destinés à être reçus dans des trous correspondants 60 de la partie supérieure 56. Cette dernière est elle-même équipée d'un ou plusieurs pions de centrage 62 qui sont reçus dans des trous de forme correspondante 64 prévus sur la partie inférieure 54. La première étape consiste à réaliser un noyau cérébral 66 et un noyau nasal 68 en un matériau pouvant être dissous dans un solvant qui ne dissout pas la résine. On peut utiliser pour cela un sel minéral or organique soluble dans l'eau, par exemple de l'hyposulfite de soude additionné de glucose, de l'alun de potassium, etc. car la résine n'est pas soluble dans l'eau.

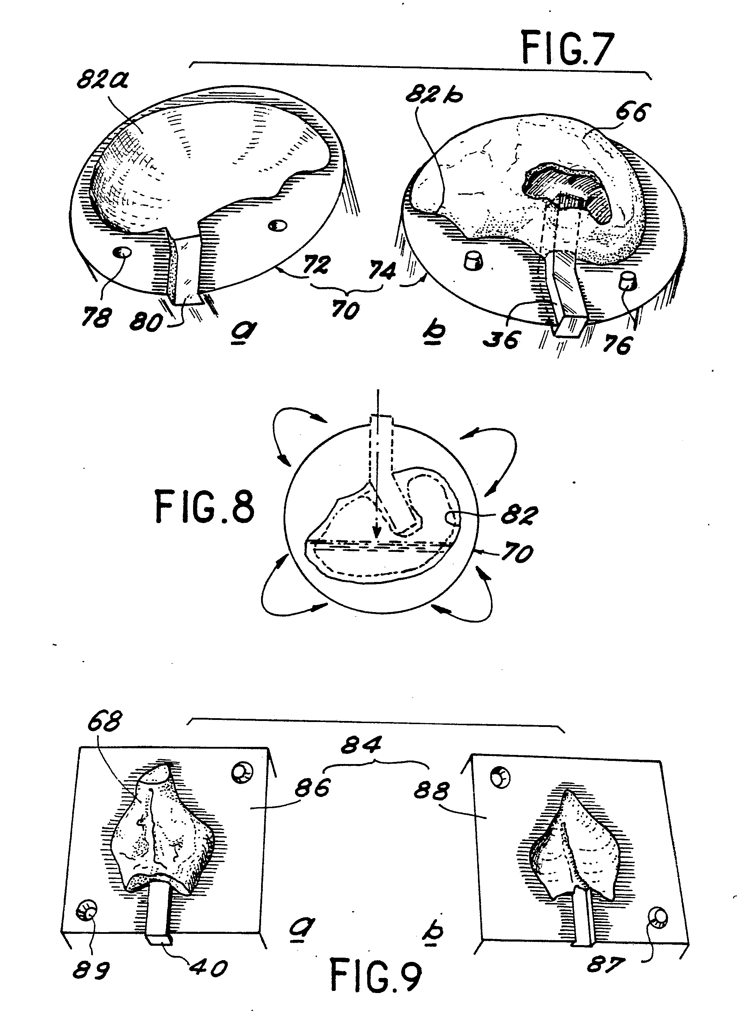

Les figures 7a et 7b montrent que le contre-moule 70 de la cavité cérébrale se compose de deux parties 72 et 74 pouvant être assemblées grâce à des pions de centrage 76 reçus dans des trous 78. Lorsqu'on a réalisé le contre-moule 70 à l'aide du noyau 32 coulé à l'intérieur du crâne en cire, on a maintenu la tige de positionnement 36, afin que le contre-moule 70 présente un passage 80.

La réalisation du noyau cérébral se fait de la manière suivante :

-on ferme le contre-moule 70 et on introduit la quantité nécessaire de matériau soluble dans la cavité 82, qui se compose de deux parties 82a et 82b correspondant aux deux parties 72 et 74 du contre-moule 70. On introduit ensuite la tige de positionnement 36 dans le logement 80, qui lui aussi se compose de deux parties. Il est à noter que cette tige 36 n'est pas nécessairement la même que celle qui a été utilisée pour réaliser les empreintes initiales avec le crâne en cire : il suffit qu'elle ait la même géométrie.

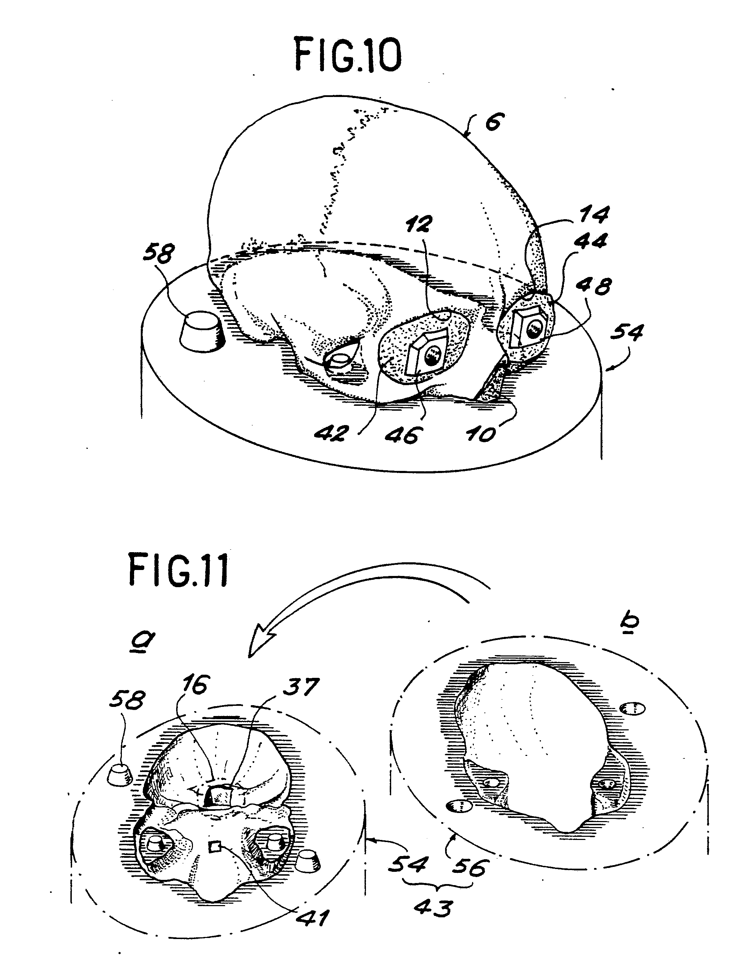

Ensuite, on remue le contre-moule dans tous les sens, comme cela est illustré à la figure 8, afin que le matériau recouvre les parois internes de la cavité 82 et forme une pellicule qui se solidifie au cours de ce mouvement, afin d'obtenir un noyau creux comme cela est illustré à la figure 7b. En effet, étant donné que le noyau 66 sera éliminé ultérieurement par dissolution dans l'eau, cette méthode permet d'économiser du matériau. Le noyau nasal 68 est réalisé de la même manière dans un contre-moule 84 se composant de deux parties 86 et 88 (figure 9). Ces dernières sont positionnées l'une par rapport à l'autre grâce à des pions de centrage 87 reçus dans des trous 89. Cependant, étant donné que le volume de la cavité nasale est très inférieur à celui de la cavité cérébrale, il est inutile dans ce cas-là d'opérer de la même manière pour obtenir une coquille creuse.

De préférence, la tige 40 n'est pas une tige rapportée, mais elle est réalisée dans le même matériau soluble que le noyau 68, afin de faciliter l'extraction du crâne en résine une fois terminé.

Si l'on se reporte à nouveau à la figure 6, on voit qu'après avoir réalisé le noyau cérébral 66 et le noyau nasal 68, l'un et l'autre étant solidaires de leurs tiges de positionnement 36 et 40 respectivement, on place ces dernières dans les logements 37 et 41 de la partie inférieure 54 du moule. Comme les tiges 36 et 40 ont la même géométrie que celles qui ont été utilisées lors de la prise d'empreintes à l'aide du crâne en cire (figure 5), le noyau nasal 68 et le noyau cérébral 66 se trouvent automatiquement en position correcte.

On place ensuite les noyaux orbitaires 42 et 44 équipés de leurs plaques 46 et 48, lesquelles sont maintenues par des vis 47 et 49 respectivement. Ces dernières sont vissées depuis l'extérieur de la partie supérieure 56 du moule en passant à travers des trous 51, 53 prévus à cet effet. Les trous 51 et 53 ont été réalisés au moment de la prise d'empreintes du crâne en cire illustrée à la figure 5. D'autre part, les plaques 46 et 48 ont été placées de telle sorte qu'elles ont laissé des traces sur la surface intérieure de la partie supérieure 56 du moule 43 : on voit sur les figures 5 et 6 la trace 48 G correspondant à la cavité orbitaire gauche. Ces traces constituent des logements qui permettent d'orienter correctement les noyaux orbitaires avant de couler la résine.

On voit encore sur la figure 6 que la partie supérieure 56 du moule comporte un trou 90 pour la coulée de la résine et un évent 92. Une fois que les deux parties 54 et 56 du moule sont assemblées, on coule la résine par le trou 90 et, lorsque tous les interstices entre les différents noyaux et les parties extérieures du moule sont remplis, on laisse durcir la résine.

Une fois que la résine a durci, on retire les vis 47 et 49 et on enlève la partie supérieure 56 du moule. On arrive ainsi à la situation de la figure 10 où la partie inférieure du crâne artificiel se trouve dans la partie inférieure 54 du moule, tandis que les noyaux orbitaires 42 et 44 avec leurs plaques 46 et 48 se trouvent encore dans les orbites. Comme les noyaux orbitaires sont réalisés en silicone, il est facile de les extraire à la main grâce à la souplesse de ce matériau. On extrait ensuite la boîte crânienne de la partie inférieure du moule. On peut également procéder en sens inverse et retirer d'abord la partie inférieure 54 du moule.

On retire ensuite la tige de positionnement du noyau correspondant à la cavité cérébrale, car la force d'adhésion est relativement faible. La boîte crânienne est ensuite placée sous un filet d'eau chaude afin de dissoudre le noyau soluble correspondant à la cavité cérébrale et le noyau correspondant à la cavité nasale.

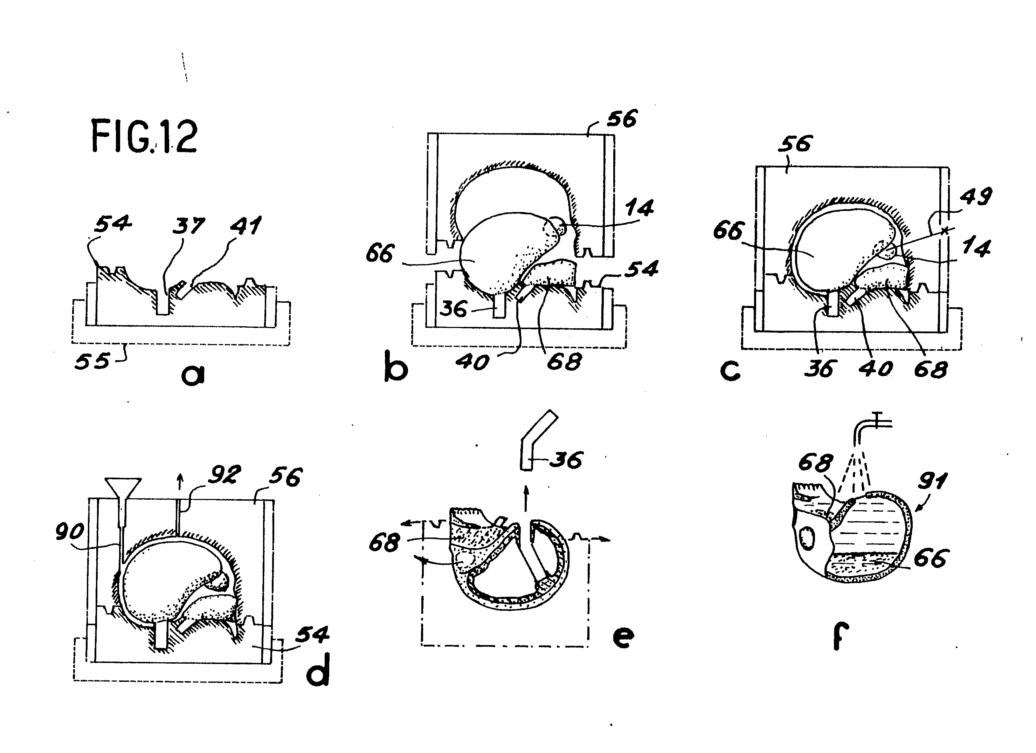

Les figures 12a à 12f résument les différentes étapes du procédé objet de l'invention. On voit sur la figure 12a que l'on place d'abord la partie inférieure 54 du moule dans l'embase 55, la partie 54 comprenant les logements 37 et 41 pour les tiges de positionnement du noyau cérébral et du noyau nasal respectivement. Une fois qu'on a réalisé ces derniers dans leurs contre-moules, comme cela a été décrit ci-dessus en référence aux figures 7 à 9, on met en place le noyau cérébral 66 en introduisant sa tige 36 dans le logement 37 et le noyau nasal 68 en introduisant sa tige de positionnement 40 dans le logement 41 (figure 12b). On amène ensuite la partie supérieure 56 du moule dans laquelle on fixe les noyaux orbitaires 12 et 14 à l'aide des vis 47 et 49 (figure 12c). On fixe également l'une à l'autre les deux parties 54 et 56 du moule. On coule ensuite la résine par le trou 90 tandis que les gaz s'échappent par le trou d'évent 92 (figure 12d). Une fois que la résine a durci, on sépare les deux parties du moule et on retire les vis qui maintiennent les noyaux orbitaires. On retire facilement la tige 36 qui n'adhère pas fortement au noyau 66 (figure 12e). Lorsque la boîte crânienne terminée 91 est extraite du moule, on introduit de l'eau chaude à l'intérieur de la cavité cérébrale et de la cavité nasale (figure 12f) afin de dissoudre le noyau cérébral 66 et le noyau nasal 68. Il ne reste plus qu'à procéder à une finition ou un ébavurage afin de donner à la boîte crânienne son aspect définitif.

Il est à remarquer qu'il n'est pas nécessaire de déterminer le module d'Young en compression en différents points d'un crâne frais et de réaliser un crâne modèle chaque fois qu'on veut réaliser un crâne artificiel.

En effet, lorsqu'on a réalisé le moule et le contre-moule, on peut les utiliser plusieurs fois de suite pour réaliser toute une série de crânes artificiels, c'est-à-dire recommencer plusieurs fois les étapes (h) à (n) sans qu'il soit nécessaire de recommencer les étapes (a) à (g).

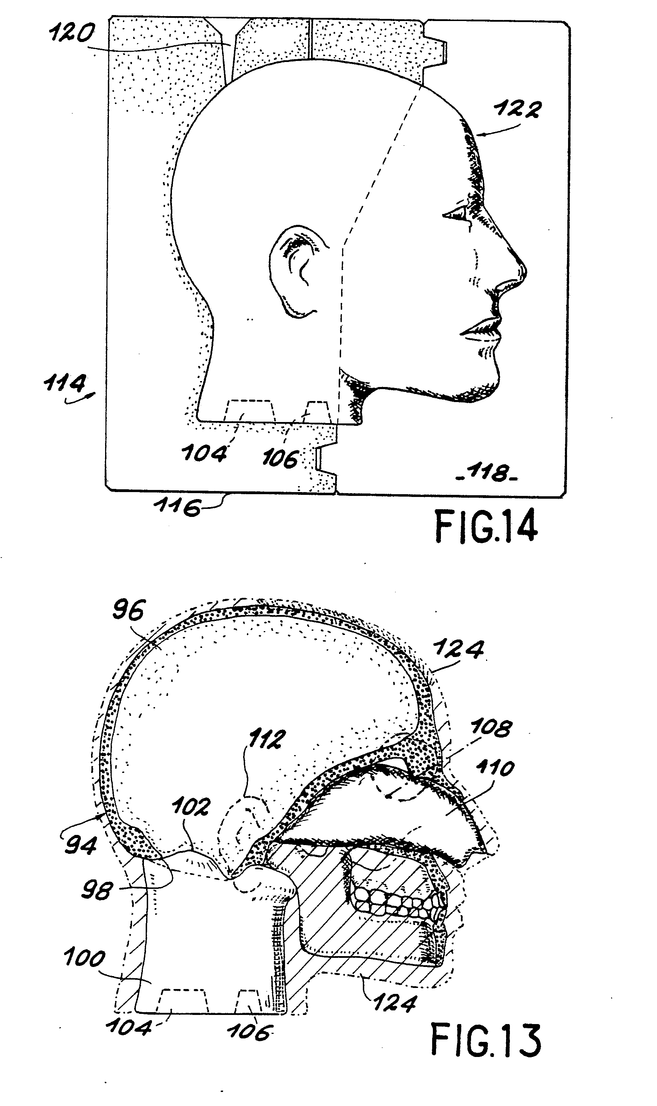

On va maintenant décrire la réalisation d'une tête prothétique selon l'invention en référence aux figures 13 à 15.

Pour cela, on commence par réaliser un crâne 94 - (figure 13) selon la méthode qui vient d'être décrite.

L'étape suivante consiste à placer un certain nombre de parties molles sur ce crâne. On rappelle qu'on désigne par "parties molles" les tissus de la tête qui ne sont pas des parties osseuses, c'est-à-dire essentiellement l'encéphale, les globes occulaires, le nez, les oreilles et la peau. Pour réaliser ces parties molles, on utilise un matériau ayant la même dureté que la partie molle correspondante d'une tête réelle. La détermination de la dureté des parties molles peut se faire directement sur un sujet vivant en ce qui concerne la peau, les oreilles et le nez ou au cours d'une opération chirurgicale pour l'encéphale et les globes occulaires.

Cette détermination peut se faire à l'aide d'un duromètre.

Dans le mode de mise en oeuvre préféré de l'invention, on utilise un silicone additionné d'huile, la dureté étant ajustée en faisant varier la quantité d'huile dans le mélange. On peut par exemple utiliser le silicone "RHODORSIL"® RTV 11 504 A et l'huile 47 V 5 0 commercialisés par la Société Rhône Poulenc. Ce RTV est un élastomère silicone bicomposant réticulant à température ambiante sous l'action du catalyseur 11 032 également commercialisé par la Société Rhône Poulenc. Il n'y a pas de phénomène d'inhibition au cours de la polymérisation de ce RTV et le produit obtenu présente une souplesse à l'allongement et une résistance au déchirement.

Le mélange de silicone et d'huile peut se faire à l'aide d'un agitateur lent. La proportion d'huile dans le mélange est variable en fonction de la dureté à obtenir. Avec les produits mentionnés ci-dessus, les proportions sont les suivantes :

-pour les globes occulaires :3 g de silicone pour 1 g d'huile ;

-pour la pyramide nasale cartilagineuse : 5 g de silicone pour 1 g d'huile ;

-pour les pavillons auriculaires : 2 g de silicone pour 1 g d'huile ;

-pour l'encéphale : quantités égales (en poids) de silicone et d'huile ;

-pour la peau : 2,5 g de silicone pour 1 g d'huile.

Si l'on se reporte à la figure 13, on voit que la première opération consiste à placer l'encéphale 96 à l'intérieur de la boîte crânienne en coulant le mélange ci-dessus par le trou occipital 98 jusqu'à remplissage complet de la cavité cérébrale.

On place ensuite le crâne sur un support vertébral 100 de forme sensiblement cylindrique et dont la forme correspond à celle d'un cou (moins l'épaisseur de la peau). On voit sur la figure 13 que ce support vertébral comporte à sa partie supérieure une bosse 102 dont la forme correspond à celle du trou occipital. D'autre part, le support 100 a une forme telle à sa partie supérieure qu'il épouse le trou occipital et la région voisine sur une largeur de 2 cm environ. Ainsi, lorsqu'il est dans la position verticale illustrée à la figure 13, le crâne repose sur lui avec la même orientation qu'un crâne réel par rapport à un cou. On voit encore sur la figure 13 que le support vertébral 100 comporte à sa partie inférieure deux trous 104 et 106 : ces trous (parties femelles) sont destinés à s'adapter à des parties mâles de forme correspondante prévues dans le moule utilisé ultérieurement pour couler le matériau simulant la peau afin de bien orienter l'ensemble support-crâne par rapport au moule. Dans les exemples qui ont été réalisés, il y avait un premier trou de forme conique de 15 mm de diamètre et de 15 mm de profondeur et un deuxième trou en forme de parallélépipède rectangle de 5 cm X 1,5 cm X 1,5 cm. Cependant, on ne sortirait pas du cadre de l'invention en utilisant des trous de formes et de dimensions différentes ou en utilisant d'autres moyens pour orienter le support 100 par rapport au moule.

Dans le cas général où l'on réalise une tête qui comprend non seulement le crâne, mais également au moins une partie du cou, le matériau simulant la peau est coulé non seulement autour du crâne, mais également autour du support vertébral 100. Ce dernier ne peut donc pas être réutilisé et il faut un support par tête. Le support peut être réalisé par moulage de manière classique par réalisation d'un modèle, qui peut etre en cire, et prise d'empreinte de ce modèle en deux étapes, ce qui permet de réaliser un moule en deux parties dans lequel seront coulés tous les supports. De préférence, ceux-ci sont en résine époxy.

Une fois que le crâne 94 contenant l'encéphale 96 est posé sur le support vertébral 100, on met en place les globes oculaires 108 dans les cavités orbitaires, la pyramide nasale 110 dans la cavité nasale et les pavillons auriculaires 112 sur les tempes. Ces différents éléments peuvent être obtenus par moulage de manière classique dans un moule réalisé par prise d'empreinte d'un modèle en cire. Il faut un moule pour la pyramide nasale, un moule pour chacune des deux oreilles et un moule pour chaque globe oculaire. Ces différents éléments sont réalisés avec un silicone additionné d'huile comme indiqué ci-dessus.

Dans le cas des produits cités plus haut, les parties molles ainsi obtenues présentent l'avantage de pouvoir se coller directement sur la résine époxy constituant le crâne 94. Cependant, on ne sortirait pas du cadre de l'invention en utilisant d'autres moyens de fixation.

Une fois tous ces éléments mis en place, le crâne 94 avec son support 100 est mis dans un moule 114 (figure 14) constitué de deux parties 116 et 118. Les trous 104 et 106 du support 100 sont encastrés sur des parties mâles de forme correspondante non représentées) prévues sur la partie 116 du moule. Après fermeture du moule 114 par assemblage de ses deux parties 116 et 118, on coule le matériau simulant la peau par le trou 120 prévu à cet effet, on le laisse durcir et on extrait la tête terminée 122. Sur la figure 13, on a représenté le contour extérieur de la peau - (donc de la tête terminée) par la ligne en traits mixtes 124. Le poids d'une tête prothétique ainsi réalisée est de 4,8 kg environ.

Le moule 114 peut être réalisé de la manière suivante :

On réalise d'abord un crâne par le procédé décrit ci-dessus ainsi qu'un support vertébral 100 tel que celui illustré à la figure 13. Eventuellement, on peut prendre un crâne réalisé différemment, mais sa forme extérieure doit être identique à celle des crânes artificiels qui seront utilisés ensuite. Puis on recouvre le tout d'un matériau apte à être sculpté, par exemple une cire. Celle-ci est ensuite façonnée de manière à lui donner la forme et les dimensions extérieures d'une tête réelle. Il est à noter qu'au cours de cette opération, la cire remplit les cavités orbitaires et la cavité nasale. Des mesures effectuées sur des sujets vivants ont permis de déterminer les dimensions moyennes suivantes :

-hauteur totale de la tête : 21,5 cm

-hauteur du cou en dessous de la mandibule : 2,5 cm

-diamètre du cou : 9 cm

-périmètre du cou : 29 cm

-largeur de la tête dans la région mastoïdienne : 15 cm

-largeur de la tête avec les oreilles : 18 cm

dont écartement entre les oreilles et la mastoïde : 1,5 cm

-longueur des oreilles : 6 cm

-largeur de la tête de profil : 22 cm

-épaisseur des téguments frontaux : 6 mm

-épaisseur des téguments pariétaux : 8 mm

-épaisseur des téguments occipitaux : 7 mm

-épaisseur de la région des pommettes : 8 mm

-épaisseur tégumentaire au niveau des angles mandibulaires : 1 cm

-épaisseur tégumentaire au niveau de la symphyse : 1,2 cm

-épaisseur tégumentaire au niveau des joues : 1,5 cm

-profondeur des orbites osseuses : 5,4 cm

Les dimensions moyennes du nez sont les suivantes : 5,5 cm d'arête, 5 cm de haut et 3 cm de profondeur.

On prend ensuite une empreinte en deux parties de cette tête en cire afin d'obtenir les deux parties 116 et 118 du moule 114. Celui-ci peut être en silicone RTV 1502 comme le moule servant à fabriquer le crâne.

Il est à noter que le support vertébral 100 qui a servi à réaliser la tête modèle en cire a laissé une trace dans l'une au moins des parties du moule 114. Cette trace peut se présenter sous la forme de pièces mâles correspondant à des trous prévus dans le support. Afin qu'ultérieurement tous les crânes utilisés pour faire des têtes prothétiques soient bien orientés dans le moule 114, il faut que tous les supports utilisés soient identiques à celui ayant servi à faire le moule 114. Il faut donc soit prendre l'empreinte du support vertébral initial lui-même pour obtenir le moule dans lequel seront coulés les autres supports, soit réaliser tous ces supports dans un seul moule déjà existant.

Une fois le moule 114 réalisé à partir de la tête en cire, on peut soit détruire cette dernière et réaliser des têtes prothétiques par la méthode décrite ci-dessus, soit éliminer la cire (par exemple en la chauffant pour la faire fondre) et récupérer le crâne ayant servi à fabriquer la tête modèle.

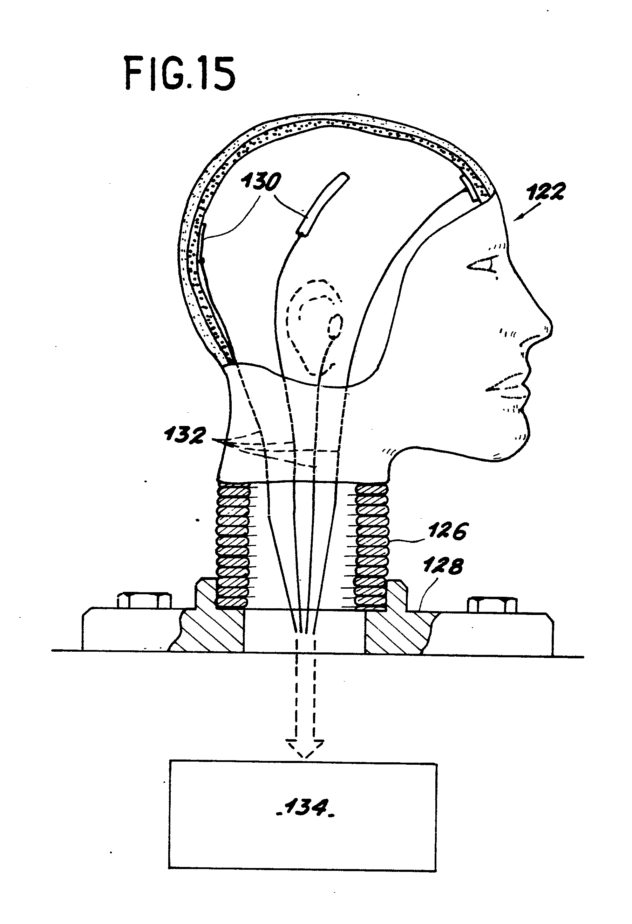

La figure 15 illustre un montage permettant d'effectuer des essais mécaniques sur une tête prothétique réalisée selon l'invention. On voit que la tête 122 repose sur un support flexible 126 par l'intermédiaire du support vertébral (non représenté sur la figure 15). Le support flexible 126 est fixé à sa partie inférieure sur un socle 128. Ce support 126 a la même flexibilité qu'un cou réel et la tête 122 se déplace donc, sous l'effet d'une sollicitation donnée, de la même manière qu'une tête réelle.

Avec le montage de la figure 15, on soumet la tête 122 à des chocs afin de déterminer les lésions qu'un choc d'intensité donnée peut provoquer et on peut également tester l'efficacité de certaines protections (casques pour motocyclistes et automobilistes notamment). Les différentes parties de la tête prothétique (à l'exception du support vertébral) ayant la même résistance mécanique que les parties correspondantes d'une tête réelle, les lésions provoquées sur la tête prothétique sont pratiquement les mêmes que celles qui seraient provoquées sur une tête réelle pour une sollicitation identique. On peut ainsi déterminer dans quels cas les lésions n'intéressent que la peau ou la peau et les os ou encore la peau, les os et le cerveau et déterminer les endroits où les lésions sont les plus graves.

On voit encore sur la figure 15 qu'on peut placer, à l'intérieur de la tête 122, un ou plusieurs capteurs 130 reliés par des fils 132 à un appareil de mesure 134. Ces capteurs peuvent être placés à un endroit quelconque à l'intérieur de la tête, par exemple à l'intérieur de l'encéphale, d'une masse osseuse, de la peau ou d'une autre partie molle ou dans la zone de contact entre deux parties différentes : il suffit de placer le capteur à l'endroit désiré avant la coulée d'une partie donnée de la tête ou de les incorporer à une partie molle lors de la fabrication de celle-ci. Ces capteurs permettent de connaître les contraintes subies sous l'effet d'un choc ou de vibrations extérieures (bruit intense par exemple) et de déterminer la contrainte ou l'accélération à des endroits autres que le point de choc initial.

Le procédé objet de l'invention présente des avantages particulièrement intéressants, puisqu'il permet de réaliser facilement un crâne artificiel ayant la forme, les dimensions et les caractéristiques mécaniques d'un véritable crâne humain. De tels crânes sont parfaitement adaptés à l'étude du comportement en cas de choc , étude qui serait impossible avec les crânes artificiels fabriqués actuellement qui se composent de deux ou plusieurs parties s'emboîtant les unes dans les autres, ce qui ne reproduit pas la configuration réelle d'un crâne humain.

D'autre part, le procédé objet de l'invention permet de réaliser facilement une tête complète ayant le même comportement mécanique qu'une tête réelle. On peut donc connaître de manière sûre les conséquences d'une sollicitation extérieure telle qu'un choc, un bruit ou une vibration quelconque. On peut déterminer le type de lésion provoqué dans des conditions données et connaître les endroits précis où les lésions sont produites, ce qui est impossible avec les dispositifs de l'art antérieur tels qu'une structure en nid d'abeille placée à l'intérieur d'une enveloppe reproduisant la forme d'une tête. L'invention permet en outre, connaissant le type de lésion et les endroits où celles-ci se produisent, de mettre au point des protections (par exemple des casques pour motocyclistes) et tester l'efficacité de ces protections.

Enfin, il est bien entendu que l'invention ne se limite pas au seul mode de réalisation qui vient d'être décrit ici, mais qu'on peut envisager des variantes sans sortir pour autant du cadre de l'invention. C'est ainsi que l'homme du métier pourra faire varier à sa guise les matériaux constituants les moules, les noyaux ou les contre-moules. Cependant, il est préférable de choisir un matériau souple pour les moules afin de faciliter le démoulage. Enfin, si dans l'exemple décrit ci-dessus on a utilisé un crâne en cire et une tête en cire comme modèles afin de réaliser les premiers moules, on peut utiliser l'un des crânes en résine ou l'une des têtes prothétiques selon l'invention pour réaliser d'autres moules et d'autres contre-moules.

**Revendications**

1. Crâne artificiel ayant les mêmes caractéristiques de forme qu'un crâne frais, caractérisé en ce qu'il est réalisé en un matériau dont l'épaisseur est adaptée pour que la résistance à la compression en un point du crâne artificiel soit voisine de la résistance à la compression au point correspondant du crâne frais.

2. Crâne artificiel selon la revendication 1, caractérisé en ce que ledit matériau est une résine époxy.

3. Crâne artificiel selon l'une quelconque des revendications 1 et 2, caractérisé en ce que, ce crâne comportant un maxillaire inférieur (4) et une boîte crânienne (6), la masse de matériau constituant les parois de la boîte crânienne (6) est homogène et continue.

4. Procédé de réalisation d'un crâne artificiel par moulage d'un premier matériau dans un moule (43) comportant plusieurs parties (54, 56), ledit crâne comportant au moins une cavité (8), caractérisé en ce qu'il comprend les étapes suivantes consistant à :

(a) -déterminer le module d'Young en compression en différents points d'un crâne frais,

(b) - calculer les épaisseurs équivalentes du premier matériau pour que la résistance à la compression soit la même en chaque point considéré,

(c) -réaliser un crâne modèle avec les épaisseurs équivalentes ainsi calculées, le crâne modèle ayant une cavité (8) correspondant à celle du crâne à réaliser,

(d) -prendre une empreinte externe du crâne modèle en deux étapes afin d'obtenir un moule (43) en deux parties - (54, 56),

(e) -prendre une empreinte de la cavité (8) du crâne modèle afin d'obtenir un noyau (32), les étapes (d) et (e) étant effectuées simultanément,

(f) -éliminer le crâne modèle,

(g) - prendre une empreinte du noyau (32) afin d'obtenir un contre-moule (70),

(h) -réaliser, dans le contre-moule (70), un deuxième noyau (66) en un deuxième matériau pouvant être éliminé sélectivement par rapport au premier,

(i) -placer le deuxième noyau (66) dans l'une (54) des parties du moule (43) en l'orientant grâce à un moyen de positionnement approprié (36),

(j) -fermer le moule (43) par assemblage de ses différentes parties (54, 56),

(k) -introduire le premier matériau à l'intérieur du moule - (43),

(l) -laisser durcir le premier matériau,

(m) -séparer les différentes parties (54, 56) du moule (43), et

(n) -éliminer le deuxième noyau.

5. Procédé selon la revendication 4, caractérisé en ce que l'étape (a) consiste à :

(1) -prélever une éprouvette osseuse (3) de section sensiblement cylindrique et d'axe sensiblement perpendiculaire à la paroi osseuse (1) en chaque point du crâne frais dont on veut déterminer le module d'Young en compression,

(2) -réaliser, à partir de ladite éprouvette osseuse (3), une éprouvette d'essai (11) ayant la forme d'un cylindre régulier de même section que l'éprouvette osseuse (3), en fixant sur cette dernière au moins un élément en un matériau dont le module d'Young en compression est connu,

(3) -soumettre l'éprouvette d'essai (11) à un essai de compression, et

(4) -déterminer le module d'Young en compression de l'éprouvette osseuse (3) d'après le résultat de cet essai.

6. Procédé selon l'une quelconque des revendications 4 et 5, caractérisé en ce que, le crâne à réaliser comportant au moins une cavité orbitaire (12), il comprend en outre les étapes suivantes, effectuées avant l'étape (j) et consistant à :

(o) -réaliser un noyau orbitaire (42) en un troisième matériau,

(p) -monter sur le noyau orbitaire (42) un élément rigide - (46) présentant un trou taraudé (50),

(q) -placer le noyau orbitaire (42) à l'intérieur de l'une (56) des parties du moule (43), l'élément rigide (46) étant reçu dans un logement prévu à cet effet, et

(r) -fixer le noyau orbitaire (42) à l'aide d'une vis (47) pénétrant depuis l'extérieur de ladite partie (56) du moule - (43), à travers un trou (51) prévu à cet effet, jusque dans ledit trou taraudé (50).

7. Procédé selon la revendication 6, caractérisé en ce qu'il comporte en outre les étapes suivantes, effectuées après l'étape (l) et consistant à :

(s) -retirer la vis (47), et

(t) -extraire le noyau orbitaire (42) de la cavité orbitaire - (12).

8. Procédé selon l'une quelconque des revendications 4 à 7, caractérisé en ce que, le crâne artificiel comportant un maxillaire inférieur (4) et une boîte cranienne (6) ayant au moins une cavité (8), on réalise séparément par moulage le maxillaire inférieur (4) et la boîte cranienne (6).

9. Procédé selon l'une quelconque des revendications 4 à 8, caractérisé en ce que le premier matériau est une résine époxy.

10 Procédé selon l'une quelconque des revendications 4 à 9, caractérisé en ce que le matériau constitutif du moule - (43), du contre-moule (70) et/ou du premier noyau (32) sont des silicones.

11. Tête prothétique caractérisée en ce qu'elle comporte un crâne (94) selon l'une quelconque des revendications 1 à 3.

12. Tête prothétique selon la revendication 11, caractérisée en ce qu'elle comporte en outre au moins une partie molle - (96) ayant les mêmes caractéristiques de forme et de résistance mécanique que la partie molle correspondante d'une tête réelle.

13. Tête prothétique selon la revendication 12, caractérisée en ce que le matériau constitutif de ladite partie molle est un silicone mélangé avec de l'huile.

14. Procédé de réalisation d'une tête prothétique selon l'une quelconque des revendications 11 à 13, caractérisé en ce qu'il comprend les étapes suivantes consistant à :

(5) -réaliser un crâne artificiel (94) par le procédé selon l'une quelconque des revendications 4 à 10,

(6) -placer ce crâne (94) dans un moule (114) en deux parties (116, 118) en l'orientant grâce à un moyen de positionnement,

(7) -couler un matériau simulant la peau dans le moule - (114),

(8) -laisser durcir ce matériau,

(9) -séparer les deux parties du moule (114), et

(10)-extraire la tête terminée (122).

15. Procédé selon la revendication 14, caractérisé en ce qu'il comporte une étape supplémentaire, effectuée avant l'étape (6), consistant à placer, à un endroit donné du crâne, une partie molle (96) en un matériau ayant les mêmes caractéristiques de forme et de résistance mécanique que la partie molle correspondante d'une tête réelle.

16. Procédé selon l'une quelconque des revendications 14 et 15, caractérisé en ce qu'on utilise comme matériau constitutif de ladite partie molle (96) un silicone mélangé avec de l'huile.

17. Procédé selon la revendication 16, caractérisé en ce qu'on fait varier la quantité d'huile dans le mélange pour que la dureté de ladite partie molle (96) soit identique à celle de la partie molle correspondante d'une tête réelle.

18. Procédé selon l'une quelconque des revendications 14 à 17, caractérisé en ce que, le crâne (94) ayant un trou occipital (98), on utilise comme moyen de positionnement un support (100) ayant à une de ses extrémités une forme qui épouse celle du crâne dans la région du trou occipital - (98) et à l'autre extrémité des moyens d'orientation (104, 106) aptes à coopérer avec des moyens d'orientation correspondants prévus dans le moule (114).

19. Procédé selon la revendication 18, caractérisé en ce que la réalisation dudit support (100) comprend les étapes suivantes consistant à :

(α) -réaliser un support modèle de forme sensiblement cylindrique, ce support modèle ayant à une de ses extrémités une forme telle que le crâne puisse reposer sur ce support modèle, lorsque ce dernier est en position verticale, avec la même orientation qu'un crâne réel par rapport à un cou, et à l'autre extrémité au moins un moyen d'orientation,

(β) -prendre une empreinte du support modèle en deux parties afin de réaliser un contre-moule, et

(γ) -réaliser le support (100) par moulage de son matériau constitutif dans ledit contre-moule.

20. Procédé selon l'une quelconque des revendications 14 à 19, caractérisé en ce que la réalisation du moule (114) comprend les étapes suivantes consistant à :

(δ) -réaliser un crâne ayant la même forme extérieure que celui utilisé pour la réalisation de la tête prothétique,

(ε) -placer ce crâne sur un moyen de positionnement identique à celui utilisé à l'étape (2),

(ζ) -recouvrir extérieurement ce crâne et ce moyen de positionnement d'un matériau apte à être sculpté,

(η) -sculpter ce matériau pour lui donner la forme et les dimensions extérieures d'une tête réelle, constituant ainsi une tête modèle, et

(θ) -prendre une empreinte de cette tête modèle en deux étapes, réalisant ainsi le moule (114).

21. Procédé selon l'une quelconque des revendications 14 à 20, caractérisé en ce qu'il comporte une étape supplémentaire, effectuée avant l'étape (3), consistant à placer un capteur de mesure (130) à un endroit donné de la tête.

0 195 718

FIG.1

FIG.2

**FIG.3**

**FIG.4**

# FIG. 5

FIG.6

FIG.7

82a
82b
66
72
74
70
78
80
a
b
36
76

FIG.8
82
70

68
84
86
88
a
b
89
40
FIG.9
87

## FIG.10

## FIG.11

# FIG.12

54 37 41

55

a

56

14

66

54

36

40 68

b

56

49

66

14

36 40 68

c

92 56

90

54

d

36

68

e

68

91

66

f

0 195 718

120

122

114

104    106

116

_118_

FIG.14

96

124

112

108

110

102

94

98

100

104    106

124

FIG.13

FIG.15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 334 160 (SYNTHES AG CHUR et al.) <br> * Page 1, lignes 27-33; page 2, lignes 24-31; page 4, lignes 1-4; page 6, lignes 2-6,34-37; figures 1,2 * <br><br> --- | 1,3,4, 14,18 | G 09 B 23/30 <br> B 29 C 33/40 |
| A | US-A-3 009 265 (BEZARK) <br><br> * Colonne 2, lignes 7-14; figures 1,2,5,6 * <br><br> --- | 1,3,8, 11 | |
| A | FR-A-2 332 846 (GIRON) <br><br> * Page 1, ligne 32; page 2, lignes 22-24; figure 4 * <br><br> --- | 4,6,7, 10,14, 18 | |
| A | DE-A-1 704 372 (VOLKSWAGEN AG) <br> * Page 2, lignes 8-14; figure * <br><br> --- | 6,7 | **DOMAINES TECHNIQUES RECHERCHES (Int. Cl.4)** <br><br> G 09 B <br> B 29 C |
| A | US-A-3 980 269 (MAURINO et al.) <br><br> * Colonne 2, lignes 35,46,47; figures 2,3 * <br><br> --- | 2,4,6, 7,9,10 | |
| A | EP-A-0 004 844 (YAMATO) <br><br> * Page 3, lignes 6-10; page 5, lignes 20-21; figures 1,4,8 * <br><br> --- -/- | 4,14, 20 | |

Le présent rapport de recherche a été établi pour toutes les revendications

| Lieu de la recherche <br> LA HAYE | Date d'achèvement de la recherche <br> 02-06-1986 | Examinateur <br> MORVAN D.L.D. |
|---|---|---|

| | Office européen des brevets | RAPPORT DE RECHERCHE EUROPEENNE | | |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 017 216 (MARCUS)<br><br>* Page 2, colonne 1, lignes 25-31; colonne 2, lignes 3-15; page 3, colonne 2, lignes 34-42; figure 1 *<br><br>--- | 4,6,7, 14 | |
| A | US-A-3 214 506 (CORBIN)<br>* Colonne 1, lignes 46-65; colonne 3, lignes 52-62; figure 5 *<br><br>--- | 4 | |
| A | DE-A-2 342 095 (FORD-WERKE AG)<br><br>* Page 3, lignes 13-18; figure 2 *<br><br>--- | 11,14, 18,21 | |
| A | US-A-4 003 141 (LE ROY)<br><br>* Colonne 2, lignes 49-61; colonne 3, lignes 32-66; colonne 4, lignes 46-51; colonne 6, lignes 22-28; figure 1 *<br><br>--- | 11,12, 21 | DOMAINES TECHNIQUES RECHERCHES (Int. Cl.4) |
| A | US-A-4 134 218 (ADAMS et al.)<br><br>* Colonne 4, lignes 22-67; colonne 6, lignes 43-47,61-68; colonne 7, lignes 1-11; figures 1,2 *<br><br>----- | 12-17, 21 | |

Le présent rapport de recherche a été établi pour toutes les revendications

| Lieu de la recherche<br>LA-HAYE | Date d'achèvement de la recherche<br>02-06-1986 | Examinateur<br>MORVAN D.L.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82